# EUROPÄISCHE PATENTANMELDUNG

(11) **EP 1 605 338 A2**
(43) Veröffentlichungstag der Anmeldung: **14.12.2005**
(21) Anmeldenummer: 05104782.7
(22) Anmeldetag: 02.06.2005
(51) Int. Cl.: G06F 3/00

(54) **System und Verfahren zur Bestimmung einer Position, insbesondere für Augmented-Reality Anwendungen**

(30) Priorität: 03.06.2004 DE 102004027270
(71) Anmelder: SIEMENS AKTIENGESELLSCHAFT, 80333 München (DE)
(72) Erfinder: Evers-Senne, Jan-Friso, 24161, Altenholz (DE); Frahm, Jan-Michael, 24109, Kiel (DE); Hamadou, Mehdi, 91052, Erlangen (DE); Jahn, Dirk, 91056, Erlangen (DE); Meier, Peter Georg, 80799, München (DE); Platonov, Juri, 81547, München (DE); Stricker, Didier, 69469, Weinheim (DE); Weidenhausen, Jens, 67547, Worms (DE)

(57) **Zusammenfassung**

Die Erfindung betrifft ein System zur Positionsbestimmung eines Benutzers und/oder einer beweglichen Vorrichtung mittels Trackingverfahren, insbesondere für Augmented-Reality Anwendungen, mit einer Schnittstelle (9) zur Integration mindestens eines Sensortyps und/oder Datengebers (1, 2, 3, 4) eines Trackingverfahrens, einer Konfigurationseinheit (20) zur Beschreibung einer Kommunikation zwischen den Trackingverfahren und/oder Trackingalgorithmen und mindestens einer Verarbeitungseinheit (5, 6, 7, 8, 10, 11, 12, 13, 16) zur Berechnung der Position des Benutzers und/oder der beweglichen Vorrichtung auf Basis der von den Trackingverfahren und/oder Trackingalgorithmen gelieferten Daten.

## Beschreibung

Die Erfindung betrifft ein System und ein Verfahren zur Positionsbestimmung eines Benutzers und/oder einer beweglichen Vorrichtung mittels Trackingverfahren, insbesondere für Augmented-Reality Anwendungen.

Augmented Reality, erweiterte Realität, ist eine Form der Mensch-Technik-Interaktion, die dem Menschen z. B. über eine Datenbrille Informationen in sein Sichtfeld einblendet und damit die von ihm wahrgenommene Realität erweitert. Um diese virtuelle Erweiterung des realen Blickfeldes positionsgenau zu erreichen, werden Trackingverfahren eingesetzt. Diese können sowohl aus Hard- als auch Software bestehen. Dabei kommen optische, inertiale, akustische, magnetische etc. Verfahren zum Einsatz. Die einzelnen Verfahren setzten dabei auf unterschiedlichen Algorithmen auf, die alle eine mehr oder minder genaue Aussage über die Position des Benutzers liefern.

Für die Bestimmung der Benutzerposition und dessen Blickrichtung, ist eine positionsgenaue Überlagerung notwendig. Einzelne Trackingverfahren haben für sich genommen Vorteile aber auch Nachteile. So kommt ein optisches Verfahren ohne zusätzliche Instrumentierung aus, benötigt dafür aber sehr viel Rechenleistung, welche derzeit nicht durch ein industrietaugliches mobiles System bereitgestellt werden kann. Inertiale Systeme verfügen über sehr gute Echtzeitfähigkeit, wohingegen solche Verfahren nur relative Bewegungen des Benutzers erfassen können. Magnetische Verfahren sind anfällig gegenüber magnetischen Felder, so dass in industriellen Umgebungen aufgrund der vorhandenen Maschinen und der elektrischen Antriebe solche Verfahren gestört werden. Ebenso können aufgrund der Geräuschkulisse in einer Produktionshalle akustische Verfahren nur bedingt zum Einsatz kommen.

Die unterschiedlichen Verfahren werden bisher fast ausschließlich alleine für sich betrachtet. Erste Ansätze gibt es bei der Kombination dieser Verfahren (z.B. inertial mit akustisch). Diese Ansätze sind aber aufgrund der aufwendigen Instrumentierung der Umgebung für industrielle, medizinische oder Konsumer-Anwendungen nicht geeignet.

Heutige Systeme beruhen hauptsächlich auf einem Verfahren. Rein videobasierte Verfahren arbeiten meist mit einer Instrumentierung der Umgebung, welche für industrielle Anwendungen nicht geeignet ist, da die Umgebung mit Marker ausgestattet werden muss. Diese Marker unterliegen in einer industriellen Umgebung den Umwelteinflüssen, so dass diese Verschmutzen und dann von dem System nicht mehr erkannt werden. Weiter ist eine Instrumentarisierung der Umgebung mit einem hohen zeitlichen Aufwand verbunden, so dass die Effektivität eines solchen Systems nicht mehr akzeptabel ist. Ebenso existieren Ansätze für optische Verfahren, welche ohne Instrumentierung auskommen. Es ist aber kein Verfahren bekannt, welches die für einen industriellen Anwendungsfall notwendige Echtzeitfähigkeit auf einem mobilen System bereitstellen kann.

In der Forschungslandschaft sind ebenfalls Kombinationen von Verfahren zu finden, die aber keinen Anspruch auf Echtzeitfähigkeit legen. Dieses ist aber für einen industriellen Einsatz unbedingt erforderlich. Weiter muss beim Einsatz in den Anwendungsdomänen berücksichtigt werden, dass tragbare Systeme zum Einsatz kommen, die nur eine begrenzte Rechenleistung zur Verfügung stellen. Ein Ansatz für ein solches System ist derzeit nicht bekannt. Weiter ist zu beachten, dass die verschiedenen Verfahren ihre Ergebnisse in unterschiedlichen Frequenzen bereitstellen. Beim Zusammenführen der Einzelergebnisse muss dieses berücksichtigt werden.

Aufgabe der vorliegenden Erfindung ist daher, ein System und ein Verfahren anzugeben, mittels dessen eine einfache Kombination und Anwendung der unterschiedlichen Trackingverfahren zur Bestimmung einer Position ermöglicht wird.

Die Aufgabe wird durch ein System mit den in Anspruch 1 angegebenen Merkmalen gelöst. Weiterhin wird die Aufgabe durch ein Verfahren mit den in Anspruch 15 angegebenen Merkmalen gelöst.

Der Erfindung liegt die Erkenntnis zugrunde, dass die Kombination der Ergebnisse der Verfahren zu einer Verbesserung des Gesamtergebnisses führt.

Über die Definition eines universellen Systems, im Folgenden Framework genannt, für die Verfahren zur Positionsbestimmung (Tracking-Framework) wird sichergestellt, dass die einzelnen Verfahren austauschbar bzw. ergänzbar sind. Dieses hat den Vorteil, dass neue bzw. verbesserte Verfahren schnell über das System bzw. Framework in eine Anwendung eingebunden werden können. Durch die Definition von Schnittstellen können ebenfalls fremd entwickelte Verfahren eingebunden werden. Hierdurch wird eine größtmögliche Offenheit gewährleistet.

Aufgrund der sehr unterschiedlichen Anwendungen und den damit verbundenen Anforderungen (Einsatzort, Einsatzbedingungen, Umgebungsbedingungen etc.) werden verschiedene Ansätze bei den Trackingverfahren benötigt. Im Anwendungsfall Automobilindustrie kommt als Arbeitsraum z.B. ein Motorraum eines Autos zum Einsatz. Dieser unterscheidet sich erheblich von dem Anwendungsfall Flugzeug, wo z.B. beim Fahrwerk keine Begrenzung des Arbeitsraumes durch die Karosserie gegeben ist. Der Anwendungsfall Automatisierung kann z.B. nicht auf existierende 3D-Modelle zurückgreifen, da diese in dieser Anwendungsdomäne in der Regel nicht vorhanden sind. Andere Anwendungsdomänen haben noch weitere unterschiedliche Randbedingungen.

Um diesen Anforderungen gerecht zu werden, wird erfindungsgemäß ein System bzw. Framework bereitgestellt, welches den Austausch bzw. die Anpassung der Verfahren erlaubt. Außerdem erlaubt ein wohl definiertes Framework schnell neue, verbesserte Verfahren in dieses Framework aufzunehmen und damit die Tauglichkeit des Gesamtsystems in der Anwendungsdomäne zu verbessern.

Ein universelles Tracking-Framework spielt eine tragende Rolle bei der Realisierung industrieller Trackingverfahren bzw. den damit verbundenen Anwendungen, da durch dieses Framework die Möglichkeit gegeben wird, verschiedene Trackingsysteme/verfahren in das System zu integrieren. Somit kann innerhalb der Anwendungen schnell auf veränderte Randbedingungen eingegangen werden und das für den Anwendungsfall passende und optimierte System ausgewählt werden.

Damit die verschiedenen Arten von Trackingverfahren zusammenarbeiten können, müssen die unterschiedlichen Sensoren an das System angeschlossen werden. Die Aufteilung in schnelle und robuste Trackinganteile ermöglicht die Realisierung der Echtzeitfähigkeit des Gesamtsystems unter der Berücksichtigung der vorhandenen Ressourcen (z.B. eines tragbaren Computers).

Das Tracking-Framework baut zur Laufzeit anhand einer Konfigurationsbeschreibung die Kommunikation zwischen den benötigten Trackingverfahren und -algorithmen auf. Die Datenflüsse dieser Kommunikation werden vom Tracking-Framework automatisch mit Zeitstempeln versehen, die die Synchronität bei der Verarbeitung der Daten sicherstellen. Durch die Flexibilität dieser Grundmechanismen sichert das Framework seine Offenheit gegenüber zukünftige verbesserte oder erweiterte Trackingverfahren.

Besonders vorteilhaft ist, dass ein Framework zur Positionsbestimmung in industriellen Umgebungen bereitgestellt wird. Dieses Framework wird den Anforderungen der Anwendungsdomänen Industrie, Medizin, Komsumer etc. gerecht, indem die Verfahren einem Gesamtsystemgedanken folgen. Das Framework bietet die Möglichkeit verschiedene Sensoren in das System neutral zu integrieren und schafft damit eine Offenheit für spätere Anpassungen und Erweiterungen. Die Integration der Verfahren geschieht mit Hilfe von definierten Schnittstellen, so dass ein Austausch von Informationen zwischen Verarbeitungseinheiten unterschiedlicher Lieferanten innerhalb des Frameworks ermöglicht wird.

Sensoren und Visualisierungseinheiten können über eine neutrale Schnittstelle auf das Framework zugreifen bzw. Informationen bereitstellen. Über die Schnittstelle können Sensoren integriert werden, die heute noch nicht bekannt sind. Die Konfigurierbarkeit durch eine einfache Beschreibung (Beispielsweise XML-Datei) ist eine neuartige Methode die Datenflüsse zwischen den einzelnen Verfahren aufzubauen. Die Übernahme der Synchronisation der Daten durch das Framework ist eine Erleichterung des Aufbaus solcher Verfahren gegenüber heutigen Techniken. Somit wird dieses Framework den Anforderungen heutiger, aber auch zukünftiger Anwendungen gerecht.

Die Schnittstelle ermöglicht weiter, dass verschiedene Visualisierungseinheiten genutzt werden können, welche z.B. optimiert für einen bestimmten Anwendungsfall sind. Somit wird mit dem Framework ermöglicht z.B. ein reines visuelles Positionsbestimmungsverfahren auf der Basis von Markern aufzubauen. Für industrielle Anwendungen müssen aber kombinierte Verfahren zum Einsatz kommen. Durch die Offenheit des Frameworks wird sichergestellt, dass komplexe Kombinationen verschiedener Verfahren aufgebaut werden können.

Weiter können verschiedene Ansätze von Augmented Reality ermöglicht werden. Diese sind zum einen eine Video-See-Through Darstellung, bei denen der Benutzer seine Umgebung mittels eines eingeblendeten Videos wahrnehmen kann. Dieses ist für industrielle Anwendungen aber nur bedingt einsetzbar, so dass mittels des Frameworks ebenfalls Optical See-Through Ansätze realisiert werden können, bei denen nur die zusätzlichen virtuellen Objekte lagerichtig auf Basis der Positionsbestimmung eingeblendet werden.

Im Folgenden ist die Erfindung anhand des in der Figur dargestellten Ausführungsbeispiels näher beschrieben und erläutert:

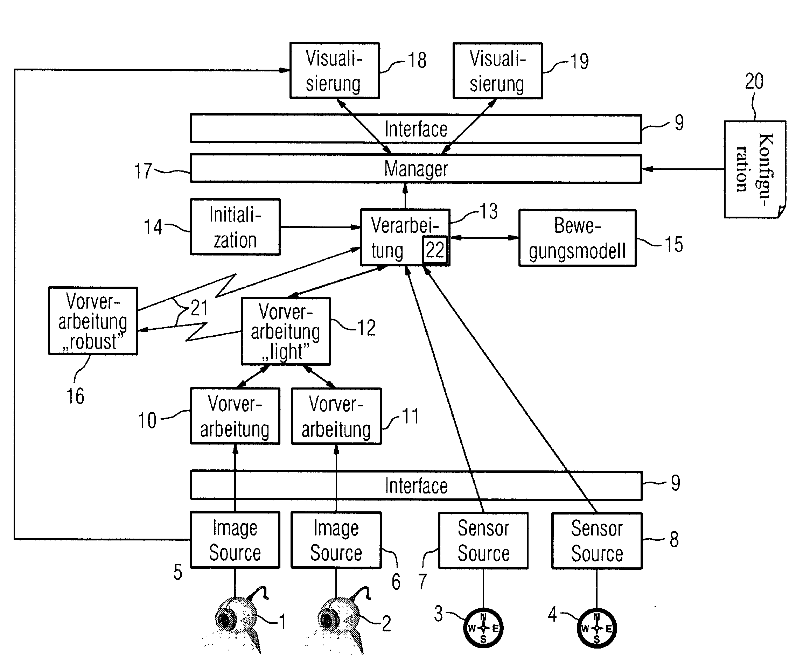

In Figur 1 ist das System, im Folgenden Framework, dargestellt. Die Wahrnehmung der Umgebung erfolgt über die Sensoren 1, 2, 3, 4. Zum einen können mehrere Videokameras 1, 2 eingesetzt werden, die den Arbeitsraum oder die Umgebung beobachten. Um die Stabilität des Gesamtsystems zu verbessern können weitere Sensoren 3, 4 integriert werden. Diese können z.B. Intertial-Sensoren aber auch Sensoren sein, welche auf anderen Verfahren beruhen.

Die Sensoren werden über sensorspezifische Verarbeitungseinheiten (Sources) 5, 6, 7, 8 an das System angeschlossen. Diese sensorspezifischen Verarbeitungseinheiten bewerkstelligen die verfahrensspezifische Umsetzung sowie die für eine Synchronisation notwendigen Erweiterungen der Sensorinformationen. Über diese Sources 5, 6, 7, 8 wird eine sensorneutrale Integration über das Framework-Interface bzw. die Schnittstelle 9 erreicht, so dass weitere und ggf. derzeit noch unbekannte Sensoren später ebenfalls integriert werden können.

Aus den videobasierten Daten werden Merkmale aus den Bildern bestimmt. Die Merkmale (z.B. Punkte, Linien, Farbwerte etc.) werden dann von Bild zu Bild verfolgt und daraus die jeweiligen Verschiebungen berechnet. Die Verschiebungen geben die Bewegung des Benutzers wieder. Dieses erfolgt in den jeweiligen Vorverarbeitungseinheiten 10, 11. Diese Einheiten sind speziell auf eine schnelle Ausführung optimiert, welche für mobile Systeme mit begrenzter Rechenleistung benötigt wird.

In der Direkt-Verarbeitungseinheit (Vorverarbeitung light) 12 wird auf Basis der Ergebnisse der Vorverarbeitung 10, 11 und der von der zentralen Verarbeitungseinheit 13 bereitgestellten genauen Position eine Benutzerposition berechnet. Die "Vorverarbeitung light" muss dabei ebenfalls Echtzeitanforderungen erfüllen. In der Indirekt-Verarbeitungseinheit 16 bei der "Vorverarbeitung robust" werden Algorithmen verwendet, die Fehlerakkumulationen, wie z.B. Drifts, vermeiden und damit eine Langzeitstabilität gewährleistet werden können. Diese Verfahren verbrauchen mehr Leistung als die anderen Verfahren.

Sollte die Leistung des Verarbeitungssystems nicht ausreichen, so kann diese Einheit ausgelagert werden. Dieses kann z.B. über eine Funkverbindung 21 erfolgen.

Alle Ergebnisse der einzelnen Verarbeitungsschritte 7, 8, 10, 11, 16 werden in der zentralen Verarbeitungseinheit 13 zusammengeführt. Hier werden mittels Berechnungen die Zuverlässigkeiten der Ergebnisse bewertet um eine möglichst genaue Aussage über die aktuelle Position des Benutzers zu treffen. Mittels eines optionalen Bewegungsmodells 15 des Menschen kann das Berechnungsergebnis weiter verbessert werden. Das Ergebnis der zentralen Verarbeitungseinheit 13 kann jedem Modul als Grundlage für die Berechnungen zur Verfügung gestellt werden. Die Module "Vorverarbeitung light" 12 und das Bewegungsmodell 15 benötigen diese Daten um weitere, neue Berechnungen durchführen zu können. Das Ergebnis der zentralen Verarbeitung 13 wird ebenfalls an einen Manager 17 geliefert.

Die Verarbeitung muss zu Beginn initialisiert werden. Die Initialisierung 14 stellt die genaue Position des Benutzers zur Verfügung. Sollte die Zuverlässigkeit der Positionsberechnung in der zentralen Verarbeitung 13 schlechter werden, wird eine weitere Initialisierung (Reinitialisierung) angestoßen. Hierdurch wird wieder eine genaue Position des Benutzers zur Verfügung gestellt. Bei der (Re-)Initialisierung ist keine Benutzersinteraktion notwendig.

Der Manager 17 verwaltet zum einen das Ergebnis der Positionsberechnung des Frameworks. Die Ergebnisse werden der Visualisierung 18, 19 bereitgestellt, welche auf der Basis der Benutzerposition die virtuellen Objekte in das Sichtfeld des Benutzers darstellen. Diese erfolgt über ein neutrales Interface 9, so dass verschiedene Visualisierungen bedient werden können. Erst mittels einer genauen Position kann eine anwendergerechte Überlagerung erfolgen.

Zum anderen wird beim Start eine Konfiguration 20 gelesen. Die Konfiguration enthält die für die Positionsbestimmung notwendigen Module sowie die zwischen den Modulen auszutauschenden Informationsströme. Mittels der Konfiguration kann somit das Framework aufgebaut und an den Anwendungsfall angepasst werden. Weiter besteht die Möglichkeit von den Visualisierungen 18, 19 Parametersätze über den Manager 17 an die Verarbeitungseinheiten zu übergeben. Die Parametersätze enthalten die situationsbezogenen Konfigurationen der Positionsbestimmung, welche über einen Anwendungsfall variieren können.

Die Figur 1 gibt einen Überblick über das Framework zur Positionsbestimmung eines Anwenders. In dieser Abbildung ist ein System mit mehreren videobasierten Sensoren sowie mehreren weiteren Sensoren dargestellt. Die Informationen der Sensoren werden verarbeitet und daraus die Position des Benutzers berechnet. Die Positionsbestimmung erfolgt dabei, wie oben beschrieben, in verschiedenen Verarbeitungsschritten, damit die notwendige Echtzeitfähigkeit des Systems gewährleistet werden kann.

Weiterhin kann mittels des Systems bzw. Frameworks neben der Position eines menschlichen Anwenders auch die Position und die Bewegungsrichtung einer beweglichen Vorrichtung, wie beispielsweise eines Roboters bestimmt werden. Die Ergebnisse der Verarbeitung der verschiedenen Trackingverfahren werden der Vorrichtung dann entsprechend in maschinenlesbarer Form zur Verfügung gestellt.

Ein Szenario für eine mögliche Nutzung des Systems/Frameworks sieht wie folgt aus:
- Es wird durch z.B. einen Anwendungsentwickler festgestellt, welche Sensoren 1, 2, 3, 4 und welche Verarbeitungseinheiten 10, 11, 12, 13, 14, 15, 16 für einen Anwendungsfall zum Einsatz kommen sollen. Aus diesen Informationen wird eine Konfiguration 20 erstellt, der die Sensoren an das System anschließt sowie die Algorithmen mit einander verschaltet. Diese Konfiguration wird dem System bekannt gemacht.
- Durch das Starten des Frameworks bzw. des Manager 17 wird die Konfiguration eingelesen und das Positionsbestimmungssystem entsprechend der Konfiguration aufgebaut. Die einzelnen Verarbeitungseinheiten 10, 11, 12, 13, 14, 15, 16 werden miteinander verschaltet, sodass eine Verarbeitung der Sensordaten ermöglicht wird.
- Eine Visualisierung 18 oder 19 wird gestartet und die Visualisierung baut über das Interface bzw. die Schnittstelle 9 eine Verbindung zum Manager 17 auf.
- Mittels der Initialisierung 14 wird die Position des Benutzers zu Beginn festgestellt. Hier kann z.B. ein markerbasiertes Verfahren zum Einsatz kommen. Es sind aber auch andere Verfahren denkbar.
- Nachdem die initiale Position des Benutzers bekannt ist, wird diese den Verarbeitungseinheiten bekannt gegeben.
- Die Anbindungen der Sensoren 5, 6, 7, 8 liefern daraufhin ihre Daten inkl. Synchronisationsdaten über das Interface bzw. die Schnittstelle 9 an die Verarbeitungseinheiten.
- Aus den videobasierten Daten 5, 6 werden in der Vorverarbeitung 10, 11 Merkmale (z.B. Punkte, Linien etc.) extrahiert, die weiter verfolgt werden. Bei einer Bewegung des Benutzers und damit einer Bewegung der erkannten Merkmale innerhalb des Bildes kann die Positionsveränderung berechnet werden.
- Diese Positionsveränderungen werden an die "Vorverarbeitung light" 12 weitergegeben. Aus der vorherigen Position sowie der Positionsveränderung wird eine neue Position mit einer Zuverlässigkeit berechnet. Die Eingangsdaten der "Vorverarbeitung light" werden an eine optionale robuste Verarbeitungseinheit 16 weitergeleitet.
- Die robuste Verarbeitungseinheit 16 hat im Gegensatz zu der vorherigen Verarbeitungseinheit 12 einen wesentlich größeren Suchbereich, so dass eine verlässlichere Positionsbestimmung berechnet werden kann.
- Bei schnellen Bewegungen des Benutzers kann es vorkommen, dass die Einheiten unter 7 und 8 keine verlässlichen Werte geliefert können, da die Verschiebungen zu groß sind. Dieses wird durch die weiteren Sensoren 3, 4 kompensiert, da diese ihr Informationen in einer wesentlich größeren Frequenz bereitstellen können.
- Die Auswertung der verschiedenen Positionsberechnungen mit ihren Verlässlichkeiten erfolgt in der zentralen Verarbeitung 13. Sollte ein Sensor temporär keine verlässlichen Positionen liefern können, werden verlässlichere Sensoren höher bewertet.
- Sollten keine Position mehr durch die zentrale Verarbeitungseinheit 13 bereitgestellt werden können, wird automatisch eine Reinitialisierung 14 angestoßen, so dass wieder eine genaue Position des Benutzers dem System bekannt ist. Diese Reinitialisierung erfolgt möglichst ohne Benutzersinteraktion.
- Der Manager 17 bezieht die aktuelle Benutzerposition von der Verarbeitung 13.
- Die Visualisierung 18 oder 19 fordert die aktuelle Position des Benutzers über das Interface 9 vom Manager 17 an. Auf Basis dieser Position wird die Überlagerung des realen Blickfeldes mit virtuellen Informationen erreicht.

## Patentansprüche

1. System zur Positionsbestimmung eines Benutzers und/oder einer beweglichen Vorrichtung mittels Trackingverfahren, insbesondere für Augmented-Reality Anwendungen, mit
- einer Schnittstelle (9) zur Integration mindestens eines Sensortyps und/oder Datengebers (1, 2, 3, 4) eines Trackingverfahrens,
- einer Konfigurationseinheit (20) zur Beschreibung einer Kommunikation zwischen den Trackingverfahren und/oder Trackingalgorithmen und
- mindestens einer Verarbeitungseinheit (5, 6, 7, 8, 10, 11, 12, 13, 16) zur Berechnung der Position des Benutzers und/oder der beweglichen Vorrichtung auf Basis der von den Trackingverfahren und/oder Trackingalgorithmen gelieferten Daten.

2. System nach Anspruch 1,
mit Mitteln, insbesondere Zeitstempeln, zur Synchronisation der Datenflüsse der Kommunikation zwischen den Trackingverfahren und/oder Trackingalgorithmen.

3. System nach einem der vorhergehenden Ansprüche,
bei dem die mindestens eine Verarbeitungseinheit (5, 6, 7, 8, 10, 11, 12, 13, 16) zur Berechnung des Blickwinkels des Benutzers und/oder der Bewegungsrichtung der beweglichen Vorrichtung auf Basis der von den Trackingverfahren und/oder Trackingalgorithmen gelieferten Daten vorgesehen ist.

4. System nach einem der vorhergehenden Ansprüche,
bei dem sensortypspezifische Verarbeitungseinheiten (5, 6, 7, 8) zur sensorneutralen Integration der von den Sensoren und/oder Datengebern (1, 2, 3, 4) gelieferten Daten in die Schnittstelle (9) vorgesehen sind.

5. System nach einem der vorhergehenden Ansprüche,
bei dem Vorverarbeitungseinheiten (10, 11) zur Berechnung der Bewegung des Benutzers und/oder der beweglichen Vorrichtung auf Basis von videobasierten Daten vorgesehen sind, wobei die Berechnung aufgrund einer Verfolgung der Verschiebung von Merkmalen in aufeinander folgenden Bildern erfolgt.

6. System nach einem der vorhergehenden Ansprüche,
mit einer Initialisierungseinheit (14) zur Bereitstellung der Position und/oder des Blickwinkels des Benutzers und/oder der Bewegungsrichtung der beweglichen Vorrichtung bei Beginn der Verwendung des Systems.

7. System nach Anspruch 6,
bei dem die Initialisierungseinheit (14) zur Re-Initialsierung und/oder zur Kalibrierung des Systems vorgesehen ist, wenn die Zuverlässigkeit der Positionsbestimmung und oder des Blickwinkels und/oder der Bewegungsrichtung schlechter wird.

8. System nach einem der vorhergehenden Ansprüche,
bei dem eine Direkt-Verarbeitungseinheit (12) zur Berechnung der Position und/oder des Blickwinkels des Benutzers und/oder der Bewegungsrichtung der beweglichen Vorrichtung vorgesehen ist, wobei die Berechnung auf Basis der Ergebnisse der Vorverarbeitungseinheiten (10, 11) und/oder der von einer zentralen Verarbeitungseinheit (13) bereitgestellten Position erfolgt.

9. System nach einem der vorhergehenden Ansprüche,
bei dem eine Indirekt-Verarbeitungseinheit (16) zur Berechnung der Position und/oder des Blickwinkels des Benutzers und/oder der Bewegungsrichtung der beweglichen Vorrichtung vorgesehen ist, wobei die Berechnung auf Basis von Algorithmen zur Fehlervermeidung erfolgt.

10. System nach einem der vorhergehenden Ansprüche,
bei dem die zentrale Verarbeitungseinheit (13) zur Zusammenführung der einzelnen Verarbeitungsschritte der Verarbeitungseinheiten (7, 8, 10, 11, 16) vorgesehen ist, wobei Mittel (22) zur Berechnung der Zuverlässigkeit der Ergebnisse vorgesehen sind.

11. System nach einem der vorhergehenden Ansprüche,
mit einer Funkverbindung (21) zur Übertragung der Daten zwischen der zentralen Verarbeitungseinheit (13) und/oder der Direkt-Verarbeitungseinheit (12) und der Indirekt-Verarbeitungseinheit (16).

12. System nach einem der vorhergehenden Ansprüche,
mit einem Bewegungsmodell (15) des Menschen und oder der beweglichen Vorrichtung zur Verbesserung des Berechnungsergebnisses.

13. System nach einem der vorhergehenden Ansprüche,
mit einem Manager (17) zur Aufnahme der berechneten Ergebnisse der zentralen Verarbeitungseinheit (13), wobei der Manager (17) zur Verwaltung der Ergebnisse der Positions- und/oder Blickwinkel- und/oder Bewegungsrichtungsberechnung vorgesehen ist.

14. System nach einem der vorhergehenden Ansprüche,
mit mindestens einer Visualisierungsvorrichtung (18, 19) zur Darstellung virtueller Objekte in einem Sichtfeld eines Benutzers, wobei der Manager (17) zur Bereitstellung der Ergebnisse der Positions- und/oder Blickwinkelberechnung für die mindestens eine Visualisierungsvorrichtung vorgesehen ist.

15. Verfahren zur Positionsbestimmung eines Benutzers und/oder einer beweglichen Vorrichtung mittels Trackingverfahren, insbesondere für Augmented-Reality Anwendungen, bei dem
- mindestens ein Sensortyp und/oder Datengeber (1, 2, 3, 4) eines Trackingverfahrens über eine Schnittstelle (9) integriert wird,
- eine Kommunikation zwischen den Trackingverfahren und/oder Trackingalgorithmen mittels einer Konfigurationseinheit (20) beschrieben wird und
- eine Position des Benutzers und/oder der beweglichen Vorrichtung auf Basis der von den Trackingverfahren und/oder Trackingalgorithmen gelieferten Daten durch mindestens eine Verarbeitungseinheit (5, 6, 7, 8, 10, 11, 12, 13, 16) berechnet wird.

16. Verfahren nach Anspruch 15,
bei dem die Datenflüsse der Kommunikation zwischen den Trackingverfahren und/oder Trackingalgorithmen insbesondere mit Zeitstempeln synchronisiert werden.

17. Verfahren nach einem der Ansprüche 15 oder 16,
bei dem der Blickwinkel des Benutzers und/oder die Bewegungsrichtung der beweglichen Vorrichtung auf Basis der von den Trackingverfahren und/oder Trackingalgorithmen gelieferten Daten berechnet wird.

18. Verfahren nach einem der Ansprüche 15 bis 17,
bei dem eine sensorneutrale Integration der von den Sensoren und/oder Datengebern (1, 2, 3, 4) gelieferten Daten in die Schnittstelle (9) durch sensortypspezifische Verarbeitungseinheiten (5, 6, 7, 8) erfolgt.

19. Verfahren nach einem der Ansprüche 15 bis 18,
bei dem die Berechnung der Bewegung des Benutzers und/oder der beweglichen Vorrichtung auf Basis von videobasierten Daten aufgrund einer Verfolgung der Verschiebung von Merkmalen in aufeinander folgenden Bildern erfolgt.

20. Verfahren nach einem der Ansprüche 15 bis 19,
bei dem die Position und/oder der Blickwinkel des Benutzers und/oder die Bewegungsrichtung der beweglichen Vorrichtung bei Beginn der Verwendung des Systems durch eine Initialisierungseinheit (14) bereitgestellt wird.

21. Verfahren nach Anspruch 20,
bei dem eine Re-Initialsierung und/oder Kalibrierung des Systems durch die Initialisierungseinheit (14) erfolgt wenn die Zuverlässigkeit der Positionsbestimmung und/oder des Blickwinkels und/oder der Bewegungsrichtung schlechter wird.

22. Verfahren nach einem der Ansprüche 15 bis 21,
bei dem die Position und/oder der Blickwinkel des Benutzers und/oder die Bewegungsrichtung der beweglichen Vorrichtung auf Basis der Ergebnisse der Vorverarbeitungseinheiten (10, 11) und/oder der von einer zentralen Verarbeitungseinheit (13) bereitgestellten Position durch eine Direkt-Verarbeitungseinheit (12) berechnet wird.

23. Verfahren nach einem der Ansprüche 15 bis 22,
bei dem die Position und/oder der Blickwinkel des Benutzers und/oder die Bewegungsrichtung der beweglichen Vorrichtung auf Basis von Algorithmen zur Fehlervermeidung durch eine Indirekt-Verarbeitungseinheit (16) berechnet wird.

24. Verfahren nach einem der Ansprüche 15 bis 23,
bei dem die einzelnen Verarbeitungsschritte der Verarbeitungseinheiten (7, 8, 10, 11, 16) durch eine zentrale Verarbeitungseinheit (13) zusammengeführt werden, wobei eine Berechnung der Zuverlässigkeit der Ergebnisse erfolgt.

25. Verfahren nach einem der Ansprüche 15 bis 24,
bei dem die Daten zwischen der zentralen Verarbeitungseinheit (13) und/oder der Direkt-Verarbeitungseinheit (12) und der Indirekt-Verarbeitungseinheit (16)mit einer Funkverbindung (21) übertragen werden.

26. Verfahren nach einem der Ansprüche 15 bis 25,
bei dem das Berechnungsergebnis mithilfe eines Bewegungsmodells (15) des Menschen und oder der beweglichen Vorrichtung verbessert wird.

27. Verfahren nach einem der Ansprüche 15 bis 26,
bei dem die berechneten Ergebnisse der zentralen Verarbeitungseinheit (13) durch einen Manager (17) aufgenommen werden, wobei der Manager (17) die Ergebnisse der Positions-und/oder Blickwinkel- und/oder Bewegungsrichtungsberechnung verwaltet.

28. Verfahren nach einem der Ansprüche 15 bis 27,
bei dem virtuelle Objekte in einem Sichtfeld eines Benutzers mittels mindestens einer Visualisierungsvorrichtung (18, 19) dargestellt werden, wobei die Bereitstellung der Ergebnisse der Positions- und/oder Blickwinkelberechnung für die mindestens eine Visualisierungsvorrichtung durch den Manager (17) erfolgt.
